# EUROPÄISCHE PATENTSCHRIFT

(11) **EP 1 245 888 B1**
(45) Veröffentlichungstag und Bekanntmachung des Hinweises auf die Patenterteilung: **28.04.2004**
(21) Anmeldenummer: 02405192.2
(22) Anmeldetag: 12.03.2002
(51) Int. Cl.: F16L 19/02

(54) **Positionsadapter für Rohr- und Kabelverbindungen**
Positioning adapter for pipe and cable connections
Adaptateur de position pour des connections de tuyaux et câbles

(30) Priorität: 26.03.2001 CH 5582001
(43) Veröffentlichungstag der Anmeldung: 02.10.2002
(73) Patentinhaber: PMA AG, 8610 Uster (CH)
(72) Erfinder: Hüppi, Roger, 8038 Zürich (CH)
(74) Vertreter: Bruderer, Werner

(56) Entgegenhaltungen:
- FR-A- 1 030 266
- GB-A- 2 220 243

## Beschreibung

Die Erfindung betrifft einen Positionsadapter für Rohr- und Kabelverbindungen mit einem Gewindezwischenstück zum Anschluss an eine Wand und einem mit dem Gewindezwischenstück drehbar verbundenen Anschlussteil, welches eine Schraubverbindung für Anschlusselemente aufweist, wobei das Anschlussteil und das Gewindezwischenstück je eine zylindrische Lagerfläche aufweisen und in diesen Lagerflächen je eine Ringnute angeordnet ist, sowie dieses Anschlussteil mittels eines in die Ringnuten eingreifenden Sprengringes drehbar am Gewindezwischenstück gehalten ist.

Positionsadapter dieser Art finden beispielsweise im Bereiche der Einführung von Kabeln und/oder Rohren in Gehäuse oder bei der Durchführung durch Wandungen Verwendung. Der Einsatz erfolgt dabei zumeist in Verbindung mit einem Winkelelement. Mögliche Einsatzbereiche sind beispielsweise Kabelverbindungen zwischen einem Steuerschrank und einem beweglichen Maschinenteil, wobei die Kabel in einem flexiblen Schutzrohr geführt werden und das Kabel mit dem Schutzrohr nicht rechtwinklig zur Wandung des Steuerschrankes, bzw. des Maschinenteiles verläuft. In diesen Fällen ist es notwendig, das Winkelelement, bzw. den Winkeladapter möglichst genau in der Richtung des Kabels, bzw. Schutzrohres auszurichten. Bei Winkeladaptern, bzw. Winkelelementen, welche direkt in die Wandung eingeschraubt werden und mit einem Flansch an dieser anliegen, ist eine derartige Positionierung nicht möglich. Es besteht deshalb die Gefahr, dass derartige Anschlussadapter, welche über eine Schraubverbindung mit der Wand verbunden werden, überdreht werden, so dass die Gewindeverbindung beschädigt werden kann, oder dass die Gewindeverbindung durch Rückdrehen gelöst wird und damit die Festigkeit und Dichtheit der Verbindung nicht gewährleistet ist.

Aus FR 1.030.266 ist eine Lösung für eine Rohrverschraubung bekannt, bei welcher eine Spannmutter über einen Sprengring an einem Verschraubungsteil drehbar gelagert ist. Bei dieser Lösung können zwei Endteile einer Verschraubung gegeneinander positioniert und mittels der Spannmutter in dieser Position kraftschlüssig verspannt werden. Der Sprengring greift dabei teilweise in eine Nut in der Spannmutter und teilweise in eine Nut am Verschraubungsteil. Eine der beiden Nuten muss dabei so tief sein, dass sie den Sprengring aufnehmen kann, um die Montage der beiden Teile zu ermöglichen. Diese Sprengringverbindung weist den Nachteil auf, dass sie versagen kann. Einerseits ist es möglich, dass grosse Zugkräfte, welche auf die Verschraubung wirken, den Sprengring in die Montagenute zurückdrücken und die Verbindung auseinandergerissen wird. Anderseits ist es auch möglich, dass der Sprengring beim Spannen der Mutter teilweise an den Wandungen der Nuten fest haftet und dadurch zusammen gebogen wird. Dadurch wird der Sprengring ebenfalls in die Montagenute zurück bewegt und die Sperrwirkung entfällt, d.h. die Verbindung der Verschraubungsteile wird gelöst.

In GB 2 220 243 ist eine Rohrkupplung beschrieben, welche eine, um einen Sprengring drehbare, Kupplungsmutter aufweist. Bei dieser Lösung werden die beschriebenen Nachteile teilweise vermieden, indem in der Kupplungsmutter, für die Aufnahme des Sprengrings, zwei Nuten nebeneinander angeordnet und diese beiden Nuten in Achsrichtung miteinander verbunden sind. Die erste der beiden Nuten weist eine Tiefe auf, welche grösser ist als der Durchmesser des Sprengrings. Dadurch kann der Sprengring bei der Montage der Kupplung aufgeweitet und über einen Kupplungszapfen geschoben werden bis er in eine Nute an diesem Kupplungszapfen einrastet. Die zweite der beiden Nuten weist nur eine Tiefe auf, welche dem halben Durchmesser des Sprengrings entspricht. In verspanntem Zustand der Rohrkupplung liegt der Sprengring in der Nute am Kupplungszapfen und in der zweiten Nute in der Kupplungsmutter. Die reduzierte Tiefe der zweiten Nute verhindert ein Aufdrücken des Sprengrings. Infolge der grossen Axialkräfte, welche im Bereiche des Sprengrings wirken, kann dieser durch die Kante der zweiten Nute beschädigt oder sogar abgeschert werden.

Es ist deshalb Aufgabe der vorliegenden Erfindung, einen Positionsadapter zu schaffen, welcher einerseits eine feste und dichte Schraubverbindung mit einer Wand gewährleistet, und anderseits die genaue Positionierung eines Anschlusselementes, insbesondere eines Winkeladapters und damit eines Kabels und/oder Schutzrohres in eine bestimmte Richtung ermöglicht. Diese positionierbare Verbindung soll gegen unbeabsichtigtes Lösen geschützt sein und einen hohen Widerstand gegen Auszugkräfte, welche auf die eingeführten Kabel, bzw. Rohre wirken, aufweisen. Die Verbindung soll dreh- und positionierbar sein und auch nach mehrmaligem Lösen und Wiederherstellen der Verbindung keine Beschädigungen aufweisen.

Diese Aufgabe wird durch die im Patentanspruch 1 definierten Merkmale gelöst. Vorteilhafte Weiterbildungen der Erfindung ergeben sich nach den Merkmalen der abhängigen Patentansprüche.

Die erfindungsgemässe Anordnung eines Verbindungselementes in Form eines Sprengrings zwischen einem Gewindezwischenstück und einem dreh- und positionierbaren Anschlussteil bringt den Vorteil, dass durch Ausnutzung der Elastizität, bzw. Federwirkung des Ringelementes in radialer Richtung ein einfacher Zusammenbau des Gewindezwischenstückes mit dem Anschlussteil möglich ist und nach dem Zusammenbau eine betriebssichere, normalerweise nicht mehr lösbare Drehverbindung entsteht. Das Anschlussteil und das Gewindezwischenstück wirken über zylindrische Lagerflächen, welche die gegenseitigen Drehbewegungen ermöglichen, zusammen, wobei in diesen Lagerflächen je eine Ringnute angeordnet ist, welche den Sprengring aufnehmen. Ein, gegen die Längsachse des Positionsadapters konvergierender Bereich einer Seitenwandung einer Nute bewirkt ein Verspannen des Sprengringes in den Nuten, so dass ein Lösen der Verbindung unter Zugkräften unmöglich ist. Eine am Anschlussteil angeordnete Schulter, welche in eine ringförmige Nut am Gewindezwischenstück eingreift, bildet eine zusätzliche Sicherung gegen Aufsprengkräfte in radialer Richtung. Besondere Vorteile ergeben sich, wenn ein Sprengring mit einem kreisförmigen Querschnitt verwendet wird. Dies hat den Vorteil, dass derartige Sprengringe handelsübliche Bauelemente sind, und sich eine leichte Drehbarkeit in nicht verspanntem Zustand und ein sehr guter Kraftübergang im verschraubten Zustand ergibt. Es ist aber auch möglich, Sprengringe mit anderen Querschnitten, beispielsweise einem mehreckigen Querschnitt, zu verwenden.

Bei Einsatz eines Sprengringes mit einem kreisförmigen Querschnitt weist eine der beiden Nuten einen halbkreisförmigen Querschnitt auf, und die andere Nute einen Querschnitt, welcher mindestens so gross ist, wie der Querschnitt des Sprengringes. Dabei ist die Tiefe dieses Querschnittes in radialer Richtung mindestens so gross wie die Höhe, bzw. der Durchmesser des Querschnittes des Sprengringes. Diese Ausgestaltung der beiden Ringnuten ermöglicht den Zusammenbau des Gewindezwischenstückes mit dem Anschlussteil. Wenn sich der Sprengring im montierten Zustand in radialer Richtung zusammenspannt, ist die Ringnute mit halbkreisförmigem Querschnitt innen angeordnet und die Ringnute mit dem grossen Querschnitt aussen angeordnet. Bei der Montage wird der Sprengring mit einer Hilfshülse oder einer konischen Auflauffläche am Innenteil so aufgeweitet, dass der Sprengring vollständig in der äusseren Ringnut liegt. In der zusammengebauten Position wird die Spannbewegung des Sprengringes nach innen freigegeben und der Sprengring schnappt in die innere Ringnut ein. Damit wird eine formschlüssige Verbindung gebildet, welche in unbelastetem Zustand ein Verdrehen des Anschlussteiles gegenüber dem Gewindezwischenstück ermöglicht und in verschraubtem, bzw. verspanntem Zustand die genaue Positionierung und Halterung eines mit dem Anschlussteil verbundenen Winkelelementes gewährleistet. Der verspannte Zustand wird durch die Schraubverbindung zwischen dem Positionsadapter und dem Anschlusselement, z.B. einem Winkeladapter erzeugt. Dazu wird die Schraubverbindung mit einem angemessenen Drehmoment eingeschraubt. Der Sprengring liegt im verspannten Zustand des Positionsadapters im Einlauftrichter an der Seitenwand der äusseren Ringnute. In dieser Position ist ein Aufweiten des Sprengringes durch Reibungs- und Radialkräfte nicht möglich, sondern er wird als Folge von Kräften in Richtung der Längsachse progressiv in die innere Nute gedrückt. In dieser verspannten, bzw. verschraubten Position liegen die beiden Ringnuten nicht mehr in einer gemeinsamen Radialebene.

Die Anordnung eines zylinderförmigen Ansatzes an einem der Teile des Positionsadapters, insbesondere am Gewindezwischenstück und einer Zylinderbohrung am anderen Teil, d.h. am Anschlussteil, bringt den Vorteil, dass in einfacher Weise eine zusätzliche Dichtung eingelegt werden kann. Dazu sind am zylinderförmigen Ansatz und an der Zylinderbohrung entsprechende Dichtflächen angeordnet, an welchen eine Dichtung anliegt. Diese Anordnung ermöglicht eine sichere Abdichtung zwischen einem in das Anschlussteil eingeschraubten Anschlusselement z.B. einem Winkeladapter und dem Gewindezwischenstück.

Im folgenden wird die Erfindung anhand von Ausführungsbeispielen unter Bezugnahme auf die beiliegenden Zeichnungen näher erläutert. Es zeigen:
- Fig. 1: eine schematische Darstellung eines in eine Wand eingeschraubten Positionsadapters mit angeschlossenem Wellrohr,
- Fig. 2: einen Teilschnitt durch einen Positionsadapter mit nach innen federndem Sprengring,
- Fig. 3: einen Sprengring, wie er in den Positionsadapter gem. Fig. 2 eingesetzt ist, und
- Fig. 4: einen Teilschnitt durch den Bereich des Sprengringes und der Nuten gem. Fig. 2 in vergrössertem Massstab.

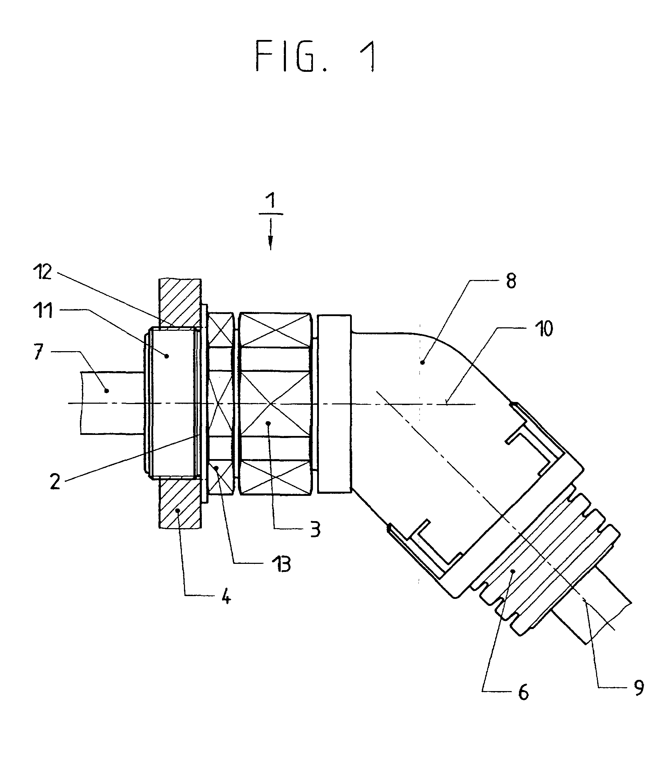

Fig. 1 zeigt eine Rohr-, bzw. Kabelverbindung, bei welcher ein Wellrohr 6 mit einer Wand 4 eines Gehäuses verbunden ist. Das Wellrohr 6 dient dabei als Schutzrohr für einen Kabelstrang 7, welcher beispielsweise von einem entfernten Maschinenelement durch die Wandung 4 in das zugehörige Gehäuse eingeführt wird. Die Verbindung des Wellrohres 6 mit der Wand 4 erfolgt dabei über einen Winkeladapter 8 und einen erfindungsgemässen Positionsadapter 1. Da die Achse 9 des Wellrohres 6 schräg zur Fläche der Wand 4 verläuft, muss der Winkeladapter 8 gegenüber der Längsachse 10 des Positionsadapters 1 drehbar und in einem vorbestimmten Winkel feststellbar sein. Der Positionsadapter 1 besteht aus einem Gewindezwischenstück 2 und einem Anschlussteil 3, wobei das Anschlussteil 3 über ein nicht sichtbares Verbindungselement in der Form eines Sprengringes 5 drehbar und formschlüssig mit dem Gewindezwischenstück 2 verbunden ist. Im Anschlussteil 3 ist ein Innengewinde 20 angeordnet, in welches ein Aussengewindestutzen 27 des Winkeladapters 8 eingeschraubt ist. Am Gewindezwischenstück 2 ist ebenfalls ein Gewindestutzen 11 angeordnet, welcher in eine Gewindebohrung 12 in der Wandung 4 eingeschraubt ist. Ein Flansch 13 am Gewindezwischenstück 2 ist mit Angriffsflächen für Werkzeuge versehen, so dass das Gewindezwischenstück 2 über den Gewindestutzen 11 und die Auflagefläche des Flansches 13 gegen die Wand 4 verspannt und befestigt werden kann.

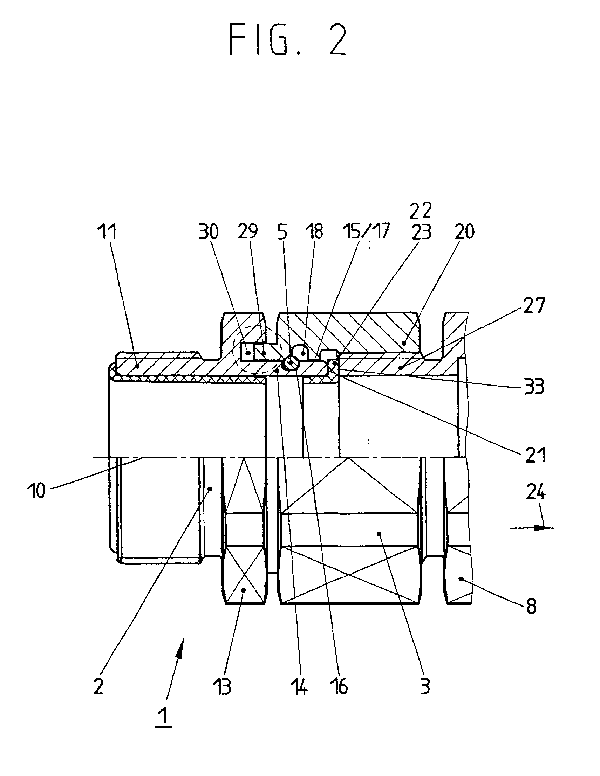

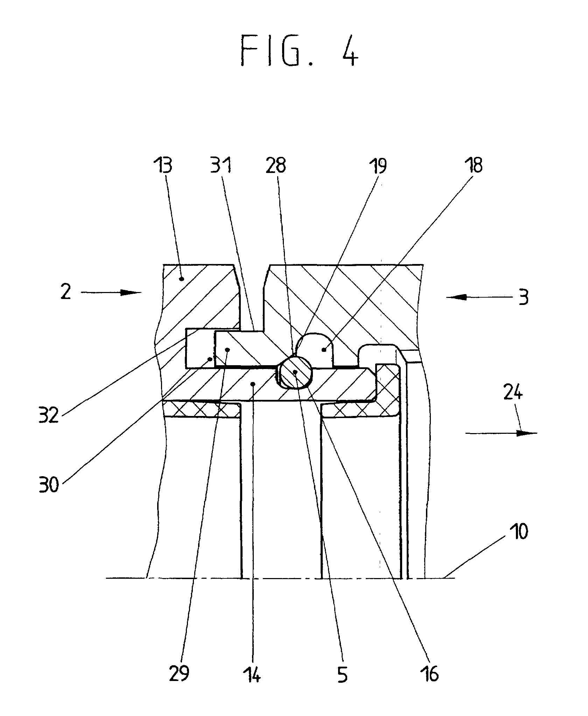

In Fig. 2 ist der Positionsadapter 1 teilweise geschnitten dargestellt. Dabei ist erkennbar, wie das Gewindezwischenstück 2 mit dem Anschlussteil 3 formschlüssig verbunden ist. Das Gewindezwischenstück 2 weist an der von der Wand abgewendeten Seite anschliessend an den Flansch 13 einen zylinderförmigen Ansatz 14 auf. Dieser Ansatz 14 bildet am Aussenmantel eine zylindrische Lagerfläche 15. In diese Lagerfläche 15 ist eine Aussennute 16 mit einem halbkreisförmigen Querschnitt eingearbeitet. Das Anschlussteil 3 weist an dem gegen die Wand 4 gerichteten Endteil eine Zylinderbohrung 17 auf, deren Durchmesser so bemessen ist, dass gegenüber dem Aussenmantel des zylinderförmigen Ansatzes 14 am Gewindezwischenstück 2 eine Gleitlagerung entsteht. In die Wandung dieser Zylinderbohrung 17 ist eine Ringnute 18 mit einem Querschnitt eingearbeitet, deren Querschnitt mindestens gleich gross ist, wie der Querschnitt des Sprengringes 5. Im zusammengebauten jedoch nicht verschraubten Zustand der beiden Teile 2, 3 des Positionsadapters 1 liegen die beiden Ringnuten 16 und 18 in einer gemeinsamen Radialebene. Als Verbindungselement ist in die äussere Ringnute 16 am zylinderförmigen Ansatz des Gewindezwischenstückes 2 ein radial federnder Sprengring 5 eingerastet. Die Federwirkung dieses Sprengringes 5 zieht den Sprengring 5 nach innen zusammen, so dass er federnd an der Grundfläche der Ringnute 16 anliegt. Dabei weist der Sprengring 5 einen kreisförmigen Querschnitt auf, und der Radius dieses kreisförmigen Querschnittes entspricht dem Radius des halbkreisförmigen Querschnittes der Ringnute 16. Der Sprengring 5 liegt somit etwa mit dem halben Querschnitt in der Ringnute 16 und ragt mit einem Teil des Querschnittes in die Ringnute 18 am Anschlussteil 3. Durch Verändern der Abmessungen und der Tiefe der Ringnute 16 am Gewindezwischenstück 2 sowie des Durchmessers des Sprengringes 5 können die zur Montage notwendigen Kräfte und die einer Ausreisskraft entgegenwirkende Haltekraft an die Bedürfnisse der Praxis angepasst werden. Die innere Ringnute 18 am Anschlussteil 3 ist so ausgebildet, dass sie den Sprengring 5 vollständig aufnehmen kann. Sie weist deshalb eine Tiefe und eine Breite auf, welche mindestens so gross sind wie der Durchmesser des kreisförmigen Querschnittes des Sprengringes 5. Die Nute 18 im Anschlussteil 3 weist eine spezielle Ausgestaltung auf, welche in Fig. 4 vergrössert dargestellt ist. Mindestens ein Teilbereich 28 einer Seitenwandung 19 der Nute 18 im Anschlussteil 3 ist schräg zur Längsachse 10 ausgebildet. Dieser Teilbereich 28 ist an derjenigen Seitenwand 19 der Nute 18 angeordnet, welche von der Schraubverbindung 20 des Anschlussteiles 3 abgewendet ist. Der schräge Teilbereich bildet einen Einlauftrichter 28, welcher gegen die Längsachse 10 und das Gewindezwischenstück 2 konvergiert. Dieser Einlauftrichter 28 mit der konusförmigen Mantelfläche wird beim Verspannen, d.h. Zusammenschrauben des Anschlussteiles 3 mit dem Winkeladapter 8 über den Sprengring 5 gezogen und drückt diesen in die Nute 16. Dadurch wird ein Öffnen des Sprengringes 5 verhindert. Zusätzlich ist an dem von der Schraubverbindung 20 abgewendeten Ende des Anschlussteiles 3 eine ringförmige Schulter 29 angeordnet. Diese Schulter 29 wirkt mit einer ringförmigen Nute 30 im Flansch 13 des Gewindezwischenstückes 2 zusammen. Im zusammengebauten Zustand des Positionsadapters 1 liegt eine äussere Mantelfläche 31 der Schulter 29 an einer inneren Mantelfläche 32 der Nute 30 an und ist in radialer Richtung abgestützt. Dies verhindert ein Aufweiten des Anschlussteiles 3 im Bereiche des Sprengrings 5, wenn Zugkräfte in Richtung des Pfeiles 24 auf den Positionsadapter 1 einwirken.

An dem von der Wand 4 weggewendeten Ende weist das Anschlussteil 3 eine Gewindebohrung 20 auf, welche zum Verbinden mit dem in Fig. 1 gezeigten Winkeladapter 8 oder einem anderen Anschlusselement dient. Im Bereiche der Stirnfläche des zylinderförmigen Ansatzes 14 des Gewindezwischenstückes 2 ist eine. Dichtfläche 21 angeordnet. Diese Dichtfläche 21 wirkt mit einer Dichtnute 22 am Anschlussteil 3 zusammen. Eine in die Dichtnute 22 eingelegte Dichtung 23 liegt sowohl an der Dichtnute 22 wie auch an der Dichtfläche 21 und an der Stirnfläche 33 des Winkeladapters an. Dabei ist die Dichtung 23 so bemessen, dass sie bei eingeschraubtem Gewindestutzen des Winkeladapters 8 den Anpresskräften standhalten kann und sicher abdichtet. Es können beispielsweise glasfaserverstärkte Dichtungen 23 eingesetzt werden.

Die Montage, bzw. der Zusammenbau des Gewindezwischenstückes 2 mit dem Anschlussteil 3 zum Positionsadapter 1 erfolgt durch axiales Zusammenfügen in Richtung der Längsachse 10. Im dargestellten Beispiel erfolgt die Montage mit einer Hilfshülse, welche durch die Gewindebohrung 20 in das Anschlussteil 3 eingeschoben wird und den Sprengring 5 radial nach aussen aufweitet und in die Ringnute 18 verdrängt. Nun wird das Anschlussteil 3 mit der Zylinderbohrung 17 über den zylinderförmigen Ansatz 14 am Gewindezwischenstück 2 geschoben, bis die Stirnfläche der Schulter 29 etwa an der Innenfläche der Nute 30 am Flansch 13 anliegt. Während dieser Verschiebebewegung schiebt sich der Sprengring 5 vorerst über die Lagerfläche 15 am zylinderförmigen Ansatz 14 bis die beiden Ringnuten 16 und 18 in einer gemeinsamen Radialebene liegen. In dieser Position rastet der Sprengring in die Ringnute 16 am Gewindezwischenstück 2 ein und klemmt sich durch die nach innen gerichtete Federwirkung fest. Damit ist das Anschlussteil 3 formschlüssig mit dem Gewindezwischenstück 2 verbunden, und die beiden Teile 2, 3 sind um die Längsachse 10 gegeneinander verdrehbar. Ein Auseinanderziehen des Anschlussteiles 3 und des Gewindezwischenstückes 2 in Richtung der Längsachse 10 ist nur mit sehr grossen Kräften und unter Zerstörungen im Verbindungsbereich möglich. Auszugskräfte, welche am Anschlussteil 3 in Richtung der Längsachse 10, bzw. des Pfeiles 24 wirken, erzeugen zwischen Anschlussteil 3 und Sprengring 5 Kraftkomponenten, welche den Sprengring 5 zusätzlich in die Ringnute 16 am Gewindezwischenstück 2 drücken. Dadurch ergibt sich eine Verbindung von hoher Sicherheit, welche trotzdem ein leichtes Verdrehen des Anschlussteiles 3 in unbelastetem Zustand ermöglicht. Auch bei vollständig eingeschraubtem Winkeladapter 8 in das Anschlussteil 3 ist bei genügend grossem Kraftaufwand ein Verdrehen um die Längsachse 10 möglich, ohne dass die Verbindung beschädigt oder gar zerstört würde. Die volle Sicherheit gegen Auszugskräfte bleibt auch nach mehrmaligem Lösen und Wiederherstellen der Verbindung zwischen dem Positionsadapter 1 und dem Winkeladapter 8 und auch bei Veränderungen der Winkelposition des Winkeladapters 8 erhalten. Dieser hochsichere Positionsadapter 1 lässt sich trotzdem in einfacher Weise herstellen, da bei Verwendung von Sprengringen 5 mit kreisförmigem Querschnitt als Verbindungselement handelsübliche Sprengringe für Wellen gemäss der deutschen Industrienorm DIN 7993 A verwendet werden können.

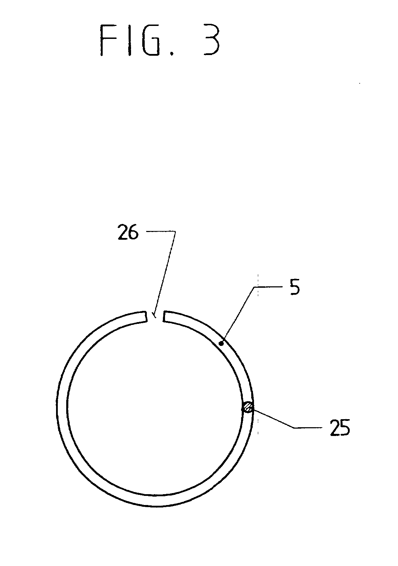

In Fig. 3 ist ein derartiger Sprengring 5 dargestellt, welcher einen kreisförmigen Querschnitt 25 aufweist. Sprengringe 5 dieser Art weisen einen Schlitz 26 auf und können deshalb entgegen ihrer radialen Federwirkung nach innen zusammengedrückt oder nach aussen aufgeweitet werden. Sobald die dazu notwendigen Zusatzkräfte entfernt werden, federn sie in ihre Ausgangsposition zurück.

Anpassungen an zusätzliche Betriebsbelastungen, bzw. Betriebsbedingungen, welche auf den Positionsadapter 1 einwirken, sind auch durch Verändem des Querschnittes des Sprengringes 5 möglich. So können beispielsweise auch Sprengringe mit mehreckigem Querschnitt eingesetzt werden, wenn speziell hohe Auszugskräfte auftreten. In diesem Fall weisen sowohl die Ringnute 16 am Gewindezwischenstück 2, wie auch die Ringnute 18 am Anschlussteil 3 einen entsprechend angepassten Querschnitt auf.

## Patentansprüche

1. Positionsadapter (1) für Rohr- und Kabelverbindungen mit einem Gewindezwischenstück (2) zum Anschluss an eine Wand (4) und einem mit dem Gewindezwischenstück (2) drehbar verbundenen Anschlussteil (3), welches eine Schraubverbindung (20) für Anschlusselemente (8) aufweist, wobei das Anschlussteil (3) und das Gewindezwischenstück (2) je eine zylindrische Lagerfläche (15, 17) aufweisen und in diesen Lagerflächen je eine Ringnute (16, 18) angeordnet ist, sowie dieses Anschlussteil (3) mittels eines, in die Ringnuten (16, 18) eingreifenden Sprengringes (5) drehbar am Gewindezwischenstück (2) gehalten ist, **dadurch gekennzeichnet, dass** eine der beiden Ringnuten (18) einen Querschnitt aufweist, welcher mindestens gleich gross ist wie der Querschnitt des Sprengringes (5) und diejenige Seitenwand (19) dieser Nute (18), welche von der Schraubverbindung (20) abgewendet ist, mindestens teilweise einen Einlauftrichter (28) mit einer konusförmigen Mantelfläche bildet, welche gegen die Längsachse (10) konvergiert und dass an dem von der Schraubverbindung (20) abgewendeten Ende des Anschlussteiles (3) eine ringförmige Schulter (29) angeordnet ist und diese Schulter (29) in eine ringförmige Nut (30) am Gewindezwischenstück (2) eingreift.

2. Positionsadapter nach Patentanspruch 1, **dadurch gekennzeichnet, dass** der Sprengring (5) einen kreisförmigen Querschnitt (25) aufweist und die Nute (16) in der Lagerfläche (15) am Gewindezwischenstück (2) einen halbkreisförmigen Querschnitt aufweist.

3. Positionsadapter nach Patentanspruch 1 oder 2, **dadurch gekennzeichnet, dass** die beiden Ringnuten (16, 18), im zusammengebauten Zustand des Positionsadapters (1) nicht in einer gemeinsamen Radialebene liegen.

4. Positionsadapter nach einem der Patentansprüche 1 bis 3, **dadurch gekennzeichnet, dass** eine äussere Mantelfläche (31) der ringförmigen Schulter (29) am Anschlussteil (3) im zusammengebauten Zustande des Positionsadapters (1) in radialer Richtung mit einer inneren Mantelfläche (32) der Nut (30) am Gewindezwischenstück (2) zusammenwirkt.

5. Positionsadapter nach einem der Patentansprüche 1 bis 4, **dadurch gekennzeichnet, dass** das Anschlusselement (8) mittels des Anschlussteiles (3) gegen das Gewindezwischenstück (2) verspannbar und in einer bestimmten Position kraftschlüssig feststellbar ist.

6. Positionsadapter nach einem der Patentansprüche 1 bis 5, **dadurch gekennzeichnet, dass** im Bereiche der Stirnfläche eines zylinderförmigen Ansatzes (14) am Gewindezwischenstück (2) eine Dichtfläche (21) und am Anschlussteil (3) eine Dichtungsnute (22) angeordnet sind und in diesem Bereiche eine Dichtung (23) eingelegt ist, wobei diese Dichtung (23) sowohl an einer Stirnfläche (33) des Winkeladapters (8) wie auch an der Dichtfläche (21) des Ansatzes (14) anliegt.

## Claims

1. Position adapter (1) for pipe and cable connections having a threaded transition piece (2) for connection to a wall (4) and having a connection part (3), which is rotatably connected to the threaded transition piece (2) and has a screw connection (20) for connection elements (8), wherein the connection part (3) and the threaded transition piece (2) each have a cylindrical bearing surface (15, 17) and in each of said bearing surfaces an annular groove (16, 18) is disposed, and wherein said connection part (3) is held rotatably on the threaded transition piece (2) by means of a snap ring (5), which engages into the annular grooves (16, 18), **characterized in that** one of the two annular grooves (18) has a cross section, which is at least as large as the cross section of the snap ring (5), and the side wall (19) of said groove (18) remote from the screw connection (20) at least partially forms a lead-in funnel (28) with a conical lateral surface, which converges towards the longitudinal axis (10), and that an annular shoulder (29) is disposed on the end of the connection part (3) remote from the screw connection (20) and said shoulder (29) engages into an annular groove (30) of the threaded transition piece (2).

2. Position adapter according to claim 1, **characterized in that** the snap ring (5) has a circular cross section (25) and the groove (16) in the bearing surface (15) on the threaded transition piece (2) has a semicircular cross section.

3. Position adapter according to claim 1 or 2, **characterized in that** the two annular grooves (16, 18), in the assembled state of the position adapter (1), do not lie in a common radial plane.

4. Position adapter according to one of claims 1 to 3, **characterized in that** an outer lateral surface (31) of the annular shoulder (29) on the connection part (3), in the assembled state of the position adapter (1), cooperates in radial direction with an inner lateral surface (32) of the groove (30) of the threaded transition piece (2).

5. Position adapter according to one of claims 1 to 4, **characterized in that** the connection element (8) is braceable towards the threaded transition piece (2) by means of the connection part (3) and is non-positively lockable in a specific position.

6. Position adapter according to one of claims 1 to 5, **characterized in that** a sealing surface (21) is disposed in the region of the end face of a cylindrical projection (14) on the threaded transition piece (2) and a seal groove (22) is disposed in the connection part (3) and a seal (23) is inserted in said region, wherein said seal (23) lies both against an end face (33) of the angle adapter (8) and against the sealing surface (21) of the projection (14).

## Revendications

1. Adaptateur de position (1) pour des connexions de tuyaux et de câbles avec une pièce intermédiaire filetée (2) à raccorder à une paroi (4) et une partie de raccordement (3) reliée de manière rotative à la pièce intermédiaire filetée (2) qui présente un raccord à vis (20) pour des éléments de raccordement (8), dans lequel la pièce de raccordement (3) et la pièce intermédiaire filetée (2) présentent chacune une surface d'appui cylindrique (15, 17) et une rainure annulaire (16, 18) est disposée sur ces surfaces d'appui, et cette pièce de raccordement (3) est retenue de manière rotative sur la pièce intermédiaire filetée (2) au moyen d'une rondelle élastique (5) s'engageant dans les rainures annulaires (16, 18), **caractérisé en ce qu'**une des deux rainures annulaires (18) présente une section transversale qui est au moins aussi grande que la section transversale de la rondelle élastique (5) et la paroi latérale (19) de cette rainure (18) qui est à l'opposé du raccord à vis (20) forme au moins en partie un cône d'entrée (28) avec une surface d'enveloppe de forme conique qui converge vers l'axe longitudinal (10) et **en ce qu'**un épaulement (29) de forme annulaire est disposé à l'extrémité de la pièce de raccordement (3) à l'opposé du raccord à vis (20) et cet épaulement (29) s'engage dans une rainure (30) de forme annulaire sur la pièce intermédiaire filetée (2).

2. Adaptateur de position selon la revendication 1, **caractérisé en ce que** la rondelle élastique (5) présente une section transversale (25) circulaire et la rainure (16) dans la surface d'appui (15) sur la pièce intermédiaire filetée (2) présente une section transversale semi-circulaire.

3. Adaptateur de position selon la revendication 1 ou 2, **caractérisé en ce que** les deux rainures annulaires (16, 18) ne se trouvent pas dans un plan radial commun en l'état monté de l'adaptateur de position (1 ).

4. Adaptateur de position selon une des revendications 1 à 3, **caractérisé en ce qu'**une surface d'enveloppe (31) extérieure de l'épaulement (29) de forme annulaire sur la pièce de raccordement (3) coopère dans le sens radial avec une surface d'enveloppe (32) intérieure de la rainure (30) sur la pièce intermédiaire filetée (2), en l'état monté de l'adaptateur de position (1 ).

5. Adaptateur de position selon une des revendications 1 à 4, **caractérisé en ce que** l'élément de raccordement (8) est serré contre la pièce intermédiaire filetée (2) au moyen de la pièce de raccordement (3) et peut être fixé de force dans une position déterminée.

6. Adaptateur de position selon une des revendications 1 à 5, **caractérisé en ce qu'**une surface de contact (21) est disposée sur la pièce intermédiaire filetée (2) et une rainure pour la garniture (22) est disposée sur la pièce de raccordement (3) dans la région de la face frontale d'une saillie cylindrique (14) et qu'une garniture (23) est insérée dans cette région, cette garniture (23) se trouvant aussi bien contre une face frontale (33) de l'adaptateur angulaire (8) que contre une face de contact (21) de la saillie (14).
